# NEUE EUROPÄISCHE PATENTSCHRIFT

(11) **EP 0 215 315 B2**
(45) Veröffentlichungstag und Bekanntmachung des Hinweises auf die Entscheidung über den Einspruch: **13.11.1996**
(45) Hinweis auf die Patenterteilung: 24.04.1991
(21) Anmeldenummer: 86111483.3
(22) Anmeldetag: 19.08.1986
(51) Int. Cl.: B60G 17/00

(54) **Federungseinrichtung für Kraftfahrzeuge**
Suspension for vehicles
Suspension pour véhicules

(30) Priorität: 14.09.1985 DE 3532896; 08.03.1986 DE 3607810
(43) Veröffentlichungstag der Anmeldung: 25.03.1987
(73) Patentinhaber: ROBERT BOSCH GMBH, 70442 Stuttgart (DE)
(72) Erfinder: Engfer, Ortwin, D-7000 Stuttgart 50 (DE)

(56) Entgegenhaltungen:
- EP-A- 0 114 757
- EP-A- 0 157 576
- FR-A- 2 560 325
- GB-A- 2 150 258
- US-A- 4 333 668
- PATENT ABSTRACTS OF JAPAN, Band 8, Nr. 238 (M-335)[1675], 31. Oktober 1984; & JP - A - 59 118 513 (TOYOTA) 09.07.1984

## Beschreibung

Die Erfindung betrifft eine Federungseinrichtung mit einer Stoßdämpfer-Federung wie sie in der US-A-4 333 668 gezeigt ist. Bei dieser Einrichtung wird das Wanken des Fahrzeugaufbaus mit Hilfe eines Wanksensors erfaßt. Je nach Querneigung des Fahrzeugaufbaus gibt der Wanksensor ein Signal an eine elektrische Steuerung.

Der Erfindung liegt die Aufgabe zugrunde, eine Federungseinrichtung der eingangs genannten Art zu schaffen, die Wankbewegungen des Fahrzeugs optimal erfassen kann. Dabei sollen die Wankschwingungen und der Wankwinkel, wie sie bei Fahrbahnwechsel, bei Kurvenfahrt oder bei Kreisfahrt auftreten, vermindert werden, und es sollen solche Wankschwingungen auch bei großer Federweichheit vermieden werden. Schließlich soll mittels der elektronischen Steuereinheit eine auf die jeweilige Wankbewegung des Fahrzeuges abgestimmte optimale Dämpfung ermittelt werden und diese mittels eines Stellgliedes an den Stoßdämpfern eingestellt werden. Diese wankabhängige Dämpfung soll dann einer rein belastungsabhängigen Grunddämpfung des Luftfederungssystems überlagert werden.

Diese Aufgabe ist bei der Federungseinrichtung gemäß dem Anspruch 1 gelöst.

### Zeichnung

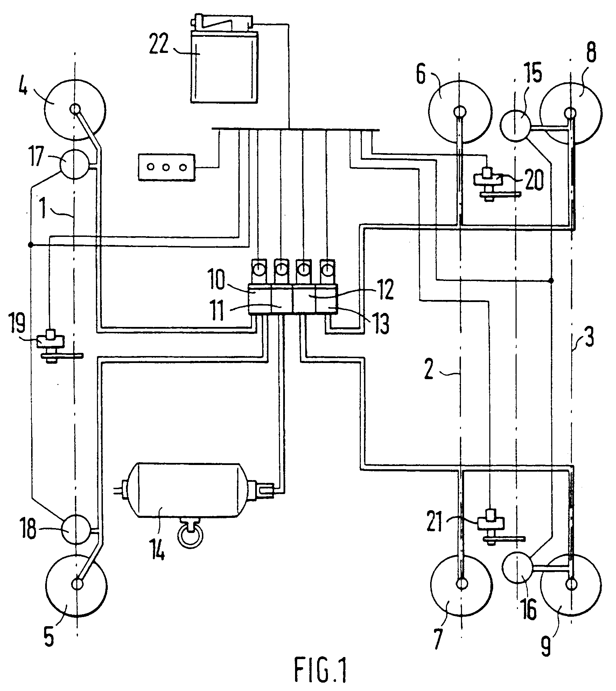

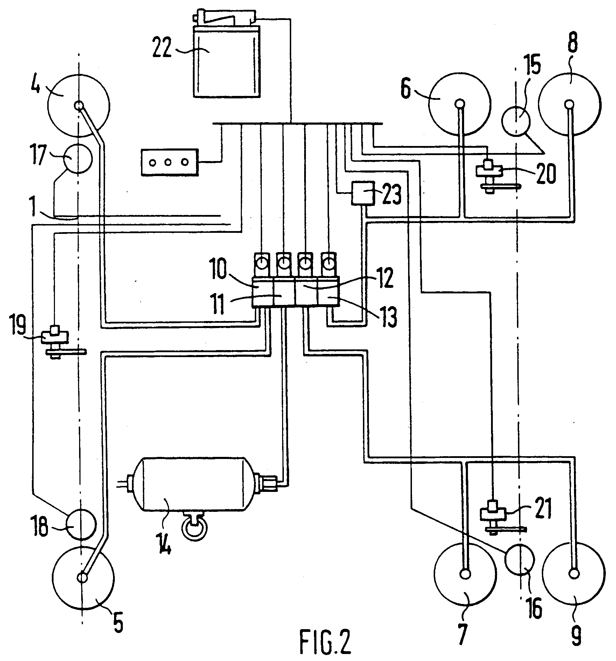

Zwei Ausführungsbeispiele der Erfindung sind in der Zeichnung dargestellt und in der nachfolgenden Beschreibung näher erläutert. Es zeigen: Figur 1 einen Omnibus mit Stoßdämpfern, die sowohl pneumatisch als auch elektrisch bzw. elektronisch ansteuerbar sind, und Figur 2 einen Omnibus, dessen Stoßdämpfer nur elektrisch bzw. elektronisch ansteuerbar sind.

### Beschreibung der Ausführungsbeispiele

Ein zum Personentransport dienender Omnibus hat eine Vorderachse 1 und zwei Hinterachsen 2 und 3. Alle drei Achsen 1, 2 und 3 sind über Federbälge 4, 5; 6, 7; 8, 9 abgefedert, die an Magnetventile 10, 11 12, 13 angeschlossen sind, von denen eines (11) ein Zulaufventil von einem Vorratsbehälter 14 ist. Die in gleicher Spur laufenden Räder der Hinterachsen 2 und 3 haben einen eigenen Luftfederbalg 6 bzw. 8, 7 bzw. 9 auf einer Fahrzeugseite, sie haben aber nur einen gemeinsamen Stoßdämpfer 15 bzw. 16; die Vorderachse 1 hat zwei Stoßdämpfer 17 und 18. Die Stoßdämpfer 15, 16; 17, 18 stehen mit den Luftfederbälgen 4, 5 bzw. 8, 9 direkt in pneumatischer Verbindung. Desweiteren hat die Vorderachse 1 einen mittig an ihr angeordneten Weggeber 19, und zwischen den zwei Stoßdämpfern 15 und 16 der Hinterachse 2 und 3 sind, jeder Fahrzeugseite zugeordnet, zwei Weggeber 20 und 21 vorgesehen. Die drei Weggeber 19, 20 und 21 und die Magnetventile 10, 11, 12 und 13 sind an eine Steuerelektronik 22 angeschlossen.

Die Stoßdämpfer 15, 16, 17, 18 sind einerseits, wie beim eingangs genannten Stand der Technik z.B. mit einem elektromagnetischen Stellglied, so ausgerüstet, daß sie über elektrische Signale ansteuerbar sind, andererseits haben sie aber auch ein druckabhängiges Stellorgan, z.B. einen Kolben oder dergleichen, das vom Druck in den Luftfederbälgen 4, 5 bzw. 8, 9 lastabhängig beeinflußbar ist. Auf diese Weise sind dann die Stoßdämpfer auch lastabhängig verstellbar. Um nun das elektrische Signal von den Wankbewegungen des Fahrzeugs abzuleiten, werden die Signale der beiden Hinterachs-Weggeber 20 und 21 in der Steuerelektronik entsprechend verarbeitet und dann den beiden Stoßdämpfern 15 und 16 zugeführt Auf diese Weise wird ein wankabhängiges Signal den Stoßdämpfern 15 und 16 elektronisch zugeführt, und ein lastabhängiges Signal wird den Stoßdämpfern 15 und 16 pneumatisch eingegeben, und die Lastabhängigkeit wird der Wankabhängigkeit überlagert, so daß die Stoßdämpfer dann wank- und lastabhängig verstellt werden.

Die Variante nach der Figur 2 ist weitgehend geradeso aufgebaut wie die Ausführung nach der Figur 1. Entsprechende Bauelemente tragen deshalb die gleichen Bezugszahlen.

Bei der Bauart nach der Figur 2 ist der Luftfederbalg 8 nicht an den Stoßdämpfer 15 sondern an einen Drucksensor 23 angeschlossen. Bei Bedarf kann ein zweiter Drucksensor an den Luftfederbalg 9 angeschlossen sein. Das Signal des Drucksensors 23 wird direkt in die Steuerelektronik 22 eingegeben.

Auf diese Weise ist es möglich, die Signale des Wankens und der Last gemeinsam in der Steuerelektronik 22 überlagernd zu verarbeiten und die Stoßdämpfer 15 und 16 nur mit einem einzigen "Verknüpfungs-" Signal anzusteuern.

Selbstverständlich kann eine solche Federungseinrichtung anstatt für Omnibusse auch für Lastkraftwagen Anwendung finden.

## Patentansprüche

1. Federungseinrichtung für Kraftfahrzeuge, die mit einer Stoßdämpfer-Federung einem Luftfederungssystem und einer Steuerelektronik ausgerüstet ist, wobei die Federungseinrichtung eine 3-Punkt-Sensierung aufweist und jedem Hinterrad mindestens einer Hinterachse des Fahrzeugs ein Weggeber (20, 21) zugeordnet ist und den Vorderrädern ein Weggeber (19) zugeordnet ist, wobei ferner die bei Wankbewegungen des Fahrzeugaufbaus entstehenden Wegsignale in den drei Weggebern (19, 20, 21) der Vorderachse (1) und der Hinterachse (2 bzw. 3) bei Überschreiten einer gewissen Größe zum Ansteuern eines elektromagnetischen Stellglieds in den Stoßdämpfern (15, 16, 17, 18), im Sinne einer Veränderung der Dämpfungsquerschnitte genutzt sind, wobei die Dämpfungsquerschnitte mittels der Steuerelektronik (22) kontinuierlich verstellt werden können, und wobei die Stoßdämpfer (15, 16, 17, 18) zusätzlich mit einem Stellorgan zur Dämpferverstellung ausgerüstet sind, das in Abhängigkeit eines Druckes in dem Luftfederungssystem lastabhängig beeinflußbar ist.

2. Federungseinrichtung nach Anspruch 1, dadurch gekennzeichnet, daß an die Luftfederung ein Drucksensor (23) angeschlossen ist, daß ferner das lastabhängige Signal und das Signal der Wankbewegung in der Steuerelektronik (22) verarbeitet werden und daß der Stoßdämpfer (15, 16) zur Dämpferverstellung von dem überlagerten Signal ansteuerbar ist.

3. Federungseinrichtung nach einem der Ansprüche 1 oder 2, dadurch gekennzeichnet, daß die Kennung der Dämpfung der Stoßdämpfer (15, 16, 17, 18) zusätzlich in Abhängigkeit von einer Bewegung des Fahrzeugaufbaues um eine rechtwinklig zur Längsachse verlaufende, horizontale Querachse, wie sie bei Nickbewegungen auftritt, geregelt ist.

## Claims

1. Suspension device for motor vehicles,the said suspension device being equipped with a shock-absorber suspension, an air-suspension system and control electronics, the suspension device having three-point sensing and each rear wheel of at least one rear axle of the vehicle being assigned a displacement sensor (20, 21) and the front wheels being assigned a displacement sensor (19), furthermore the displacement signals occurring in the event of rolling movements of the vehicle body in the three displacement sensors (19 ,20, 21) of the front axle (1) and the rear axle (2 or 3) when a particular magnitude is exceeded being utilized for activating an electromagnetic actuator in the shock absorbers (15, 16, 17, 18) with the effect of varying the absorbing cross-sections, the absorbing cross-sections being capable of being adjusted continuously by means of the control electronics (22), and the shock absorbers (15, 16, 17, 18) additionally being equipped with an actuator for shock-absorber adjustment, the said actuator being capable of being influenced in a load-dependent manner as a function of a pressure in the air-suspension system.

2. Suspension device according to Claim 1, characterized in that a pressure sensor (23) is connected to the air suspension, in that, furthermore, the load-dependent signal and the signal of the rolling movement are processed in the control electronics (22), and in that the shock absorber (15, 16) can be activated by the superposed signal for shock-absorber adjustment.

3. Suspension device according to one of Claims 1 or 2, characterized in that the absorption characteristic of the shock absorbers (15, 16, 17, 18) is additionally regulated as a function of a movement of the vehicle superstructure about a horizontal transverse axis extending at right angles to the longitudinal axis, such as occurs during pitching movements.

## Revendications

1. Suspension pour véhicule comportant une suspension avec amortisseurs, un système de ressort pneumatique et une électronique de commande, la suspension ayant une détection en trois points et chaque roue arrière d'au moins un essieu arrière du véhicule comportant un capteur de course (20, 21) et un capteur de course (19) pour les roues avant, et en outre les signaux de déplacement causés par les mouvements de roulis de la carrosserie dans les trois capteurs de course (19, 20, 21) de l'essieu avant (1) et de l'essieu arrière (2, 3), en cas de dépassement d'une certaine amplitude, étant utilisés pour commander un organe de réglage électromagnétique dans les amortisseurs (15, 16, 17, 18) dans le sens d'une modification de la section d'amortissement, la section d'amortissement se réglant en continu à l'aide de l'électronique de commande (22) et les amortisseurs (15, 16, 17, 18) étant en outre équipés d'un organe de réglage pour régler l'amortissement qui est influencé en fonction de la charge, suivant la pression régnant dans le système de suspension pneumatique.

2. Suspension selon la revendication 1,
caractérisée en ce qu'
un capteur de pression (23) est relié à la suspension pneumatique et le signal dépendant de la charge ainsi que le signal du mouvement de roulis étant traités par l'électronique de commande (22) et l'amortisseur (15, 16) est commandé par le signal combiné pour le réglage de l'amortissement.

3. Suspension selon l'une des revendications 1 ou 2,
caractérisée en ce que
la caractéristique de l'amortissement des amortisseurs (15, 16, 17, 18) est régulée en outre en fonction d'un mouvement de la carrosserie autour d'un axe transversal horizontal perpendiculaire à l'axe longitudinal comme les mouvements de tangage.
